# EUROPEAN PATENT APPLICATION

(11) **EP 2 838 066 A1**
(43) Date of publication of application: **18.02.2015**
(21) Application number: 13708059.4
(22) Date of filing: 20.02.2013
(51) Int. Cl.: G06Q 50/00, G06F 9/445, H02J 13/00

(54) **SOCIAL-INFRASTRUCTURE CONTROL SYSTEM, SERVER, CONTROL DEVICE, CONTROL METHOD, AND PROGRAM**

(30) Priority: 30.03.2012 JP 2012081090
(71) Applicant: Kabushiki Kaisha Toshiba, Minato-ku Tokyo 105-8001 (JP)
(72) Inventor: MATSUDA, Yoshiyuki, Tokyo 105-8001 (JP); KOBAYASHI, Yoshitaka, Tokyo 105-8001 (JP); OCHIAI, Makoto, Tokyo 105-8001 (JP); SUGIYAMA, Motoo, Tokyo 105-8001 (JP)
(74) Representative: Granleese, Rhian Jane
(86) International application number: PCT/JP2013/054160
(87) International publication number: WO 2013/145951

(57) **Abstract**

According to an embodiment, a social infrastructure control system includes a control apparatus, a database, a sensor, a collection unit, a calculation unit, a selection unit and a creation unit. The control apparatus controls a social infrastructure of a community based on software. The database stores a plurality of modules. The sensor detects event concerning the social infrastructure, and to output event information. The collection unit collects the event information from the sensor. The calculation unit calculates a characteristic of the social infrastructure or the community by analyzing the collected event information. The selection unit selects a module corresponding to the calculated characteristic from the database. The creation unit creates the software based on the selected module.

## Description

### Technical Field

Embodiments described herein relate generally to a social infrastructure control system for controlling a social infrastructure.

### Background Art

A society (community) where people live is supported by a wide variety of social infrastructures such as electricity, waterworks, transportation, railways, communications, and buildings. On the other hand, recently growing awareness of ecological problems and urgent energy situations require energy saving in every field of the society. There is much heated debate about how to create a social system capable of saving energy without forcing people to put up with inconveniences in life.

### Summary of Invention

### Technical Problem

In the conventional social system, the social infrastructures are basically managed and operated independently. In, for example, an electricity infrastructure, energy optimization control on a municipality (city, town, or village), region, or household basis is not implemented yet, not to mention energy saving on a country basis.

It is an object to provide a social infrastructure control system, a server, a control apparatus, a control method, and a program.

### Solution to Problem

According to an embodiment, a social infrastructure control system includes a control apparatus, a database, a sensor, a collection unit, a calculation unit, a selection unit and a creation unit. The control apparatus controls a social infrastructure of a community based on software. The database stores a plurality of modules. The sensor detects event concerning the social infrastructure, and to output event information. The collection unit collects the event information from the sensor. The calculation unit calculates a characteristic of the social infrastructure or the community by analyzing the collected event information. The selection unit selects a module corresponding to the calculated characteristic from the database. The creation unit creates the software based on the selected module.

### Brief Description of Drawings

FIG. 1 is a view showing an example of a system according to an embodiment.
FIG. 2 is a conceptual view showing an example of a social infrastructure control system according to the embodiment.
FIG. 3 is a functional block diagram showing an example of a social infrastructure control system according to the first embodiment.
FIG. 4 is a view showing an example of event information detected by a sensor 50a.
FIG. 5 is a view showing an example of event information 20a stored in a database 20 of a country cloud 100.
FIG. 6 is a view showing an example of a software module group 20b shown in FIG. 3.
FIG. 7 is a functional block diagram showing an example of the main part of a city/town/village-layer MS 30.
FIG. 8 is a flowchart showing an example of the processing procedure of the city/town/village-layer MS 30 according to the first embodiment.
FIG. 9 is a view schematically showing the gist of the concept disclosed in the embodiment.
FIG. 10 is a functional block diagram showing an example of a social infrastructure control system according to the second embodiment.
FIG. 11 is a flowchart showing an example of the processing procedure of a country-layer MS 10 according to the second embodiment.
FIG. 12 is a functional block diagram showing an example of a social infrastructure control system according to the third embodiment.
FIG. 13 is a view showing an example of a software module group 20b shown in FIG. 12.
FIG. 14 is a functional block diagram showing an example of the main part of a city/town/village-layer MS 30.
FIG. 15 is a flowchart showing an example of the processing procedure of a vendor MS 80 according to the third embodiment.
FIG. 16 is a conceptual view showing an example of a social infrastructure control system according to the fourth embodiment.
FIG. 17 is a view schematically showing the main part of the system shown in FIG. 16.
FIG. 18 is a view showing a social infrastructure control system according to the fourth embodiment.
FIG. 19 is a view showing an example of event information transmitted from a company MS 1 to a vendor MS 1 via a telecommunication line of a communication network NW.
FIG. 20 is a view showing an example of a software module group 20b shown in FIG. 18.
FIG. 21 is a functional block diagram showing an example of the main part of the company MS 1.
FIG. 22 is a functional block diagram showing an example of the vendor MS 80 shown in FIG. 18.
FIG. 23 is a flowchart showing an example of the processing procedure of the vendor MS 80 according to the fourth embodiment.
FIG. 24 is a schematic view showing an example of development of a social infrastructure and a community.
FIG. 25 is a functional block diagram showing an example of a social infrastructure control system according to the sixth embodiment.
FIG. 26 is a flowchart showing an example of the processing procedure of the company MS 1 according to the sixth embodiment.
FIG. 27 is a view showing an example of classification of a software module group.

### Description of Embodiments

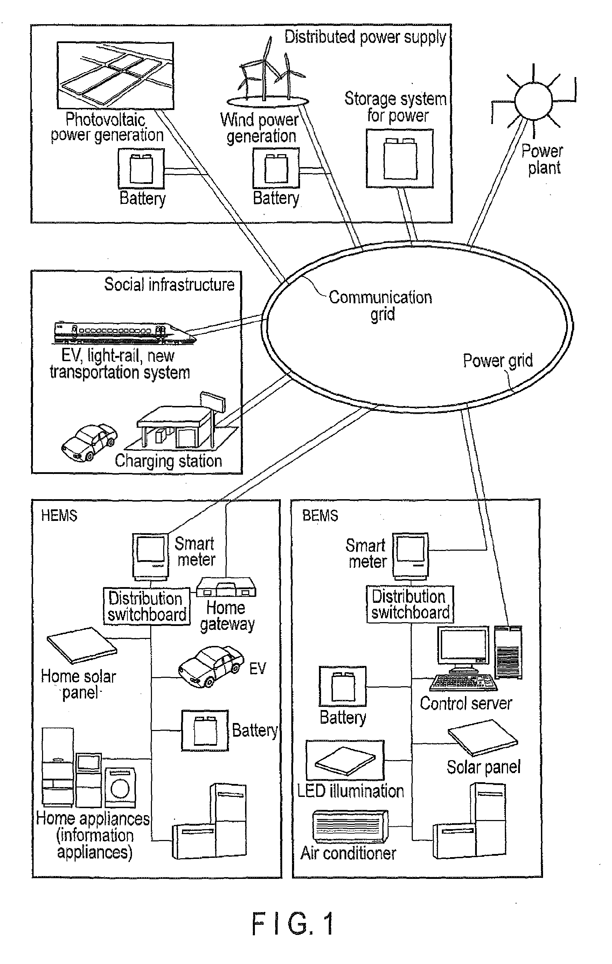

FIG. 1 is a view showing an example of a system according to an embodiment. FIG. 1 illustrates an example of a system known as a so-called smart grid. In an existing grid, existing power plants such as a nuclear power plant, a thermal power plant, and a hydroelectric power plant are connected to various customers such as an ordinary household, a building, and a factory via the grid. In the next-generation power grid, distributed power supplies such as a PV (Photovoltaic Power generation) system and a wind power plant, battery devices, new transportation systems, charging stations, and the like are additionally connected to the power grid. The variety of elements can communicate via a communication grid.

Systems for managing energy are generically called EMS's (Energy Management Systems). The EMS's are classified into several groups in accordance with the scale and the like. There are, for example, an HEMS (Home Energy Management System) for an ordinary household and a BEMS (Building Energy Management System) for a building. There also exist an MEMS (Mansion Energy Management System) for an apartment house, a CEMS (Community Energy Management System) for a community, and a FEMS (Factory Energy Management System) for a factory. Fine energy optimization control is implemented by causing these systems to cooperate.

According to these systems, an advanced cooperative operation can be performed between the existing power plants, the distributed power supplies, the renewable energy sources such as sunlight and wind force, and the customers. This allows to produce a power supply service in a new and smart form, such as an energy supply system mainly using a natural energy or a customer participating-type energy supply/demand system by bidirectional cooperation of customers and companies.

A social system offers comforts and conveniences to the social life via social infrastructures represented by the above-described smart grid. The social system in the future needs to achieve a social target such as energy saving by organically combining the diverse social infrastructures using information processing technologies, communication technologies, and the like. A social infrastructure control system according to an embodiment capable of solving this problem will be described below.

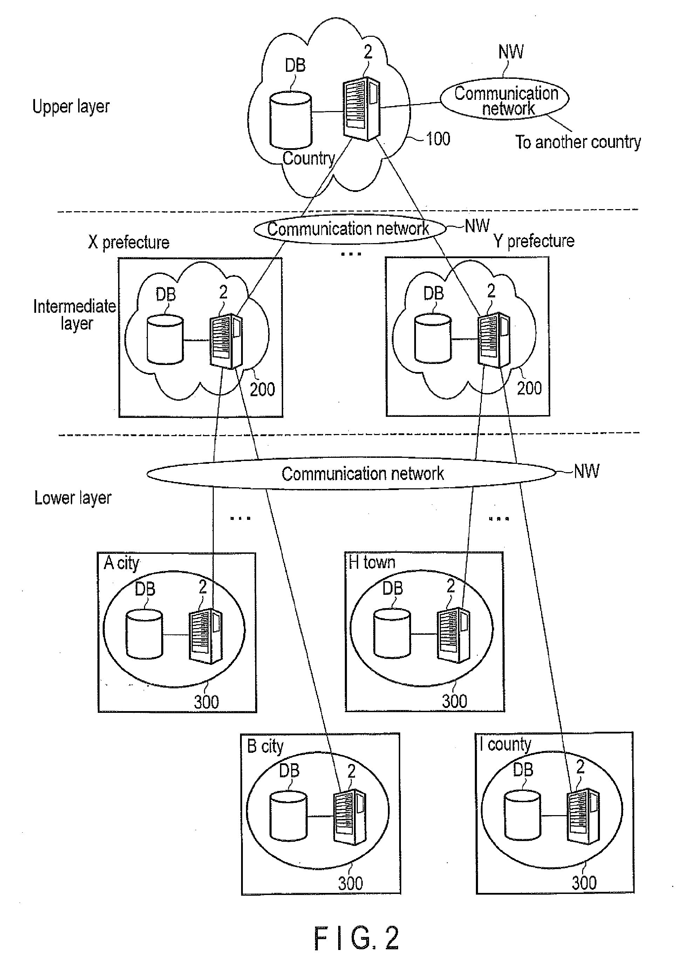

FIG. 2 is a conceptual view showing an example of a social infrastructure control system according to the embodiment. In this embodiment, the social infrastructure control system is formed into a logical hierarchical structure. FIG. 2 illustrates a form including not only an upper layer and a lower layer but also an intermediate layer lower than the upper layer and higher than the lower layer. The number of layers of the hierarchy is not limited to three. An architecture including an intermediate layer having a multilayered structure can also be implemented. Reversely, it is also possible to form a social infrastructure control system comprising only an upper layer and a lower layer. FIG. 2 shows the upper layer, the intermediate layer, and the lower layer in correspondence with hierarchical administrative sections, that is, country, prefectures, and cities/towns/villages, respectively.

In this embodiment, a form in which each layer has been Cloud-ized will be considered. As is known, a cloud computing system comprises a computer 2 and a database DB. The computer 2 can comprise either a single computer or a plurality of computers. The database can be provided in one computer 2 or distributed to a plurality of computers 2.

Referring to FIG. 2, the lower layer comprises a regional system formed in a region including social infrastructures. A cloud is formed in each of regions, for example, an A city, a B city, an H town, and an I county. The computer 2 and the database DB are provided in each cloud. The regional clouds are connected via a telecommunication line of a communication network NW and cooperate with each other in the layer.

The intermediate layer controls the lower layer as a logical upper layer. For example, the A city and the B city are controlled by an X prefecture, and the H town and the I county are controlled by a Y prefecture. Each of the X prefecture and the Y prefecture also has been Cloud-ized and comprises the computer 2 and the database DB. The X prefecture and the Y prefecture are also connected via a telecommunication line of the communication network NW and cooperate with each other.

The upper layer controls the intermediate layer as a logical upper layer. For example, the X prefecture and the Y prefecture are controlled by the country. The country also has been Cloud-ized. Other countries can also exist in the upper layer. The countries can cooperate with each other via a telecommunication line of the communication network NW. A reference numeral 100 is given to the cloud of the upper layer to express it as a country cloud 100. A reference numeral 200 is given to each cloud of the intermediate layer to express it as a prefecture cloud 200. A reference numeral 300 is given to each cloud of the lower layer to express it as a city cloud 300.

All of the country cloud 100, the prefecture cloud 200, and the city cloud 300 can have social infrastructures. For example, consider a form in which a social infrastructure of the city cloud 300 is controlled from the country cloud 100 or the prefecture cloud 200. In this case, the city cloud 300 can be regarded as a regional system, and the country cloud 100 or the prefecture cloud 200 can be regarded as an upper system. Consider a form in which a social infrastructure of the prefecture cloud 200 is controlled from the country cloud 100. In this case, the prefecture cloud 200 can be regarded as a regional system, and the country cloud 100 can be regarded as an upper system.

### [First Embodiment]

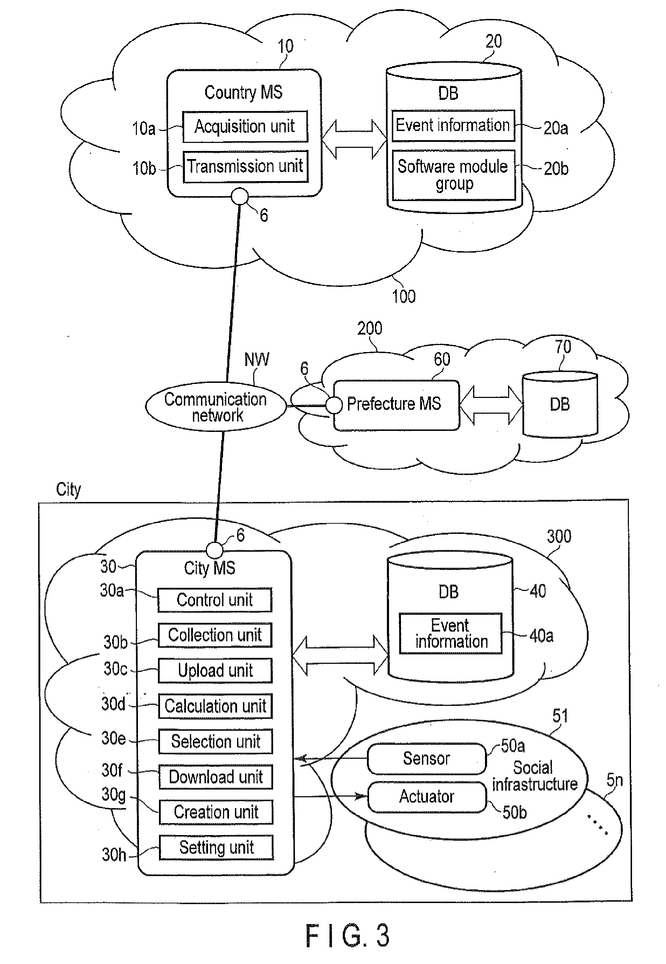

FIG. 3 is a functional block diagram showing an example of a social infrastructure control system according to the first embodiment. A country cloud 100 comprises a country-layer management system 10 and a database 20. A prefecture cloud 200 comprises a prefecture-layer management system 60 and a database 70. A city cloud 300 established in relation to the community comprises a city/town/village-layer management system 30, a database 40, and a plurality of social infrastructures 51 to 5n.

For the sake of brevity, the management system will be referred to as MS hereinafter. The country-layer management system 10 will be referred to as the country MS 10. The prefecture-layer management system 60 will be referred to as the prefecture MS 60. The city/town/village-layer management system 30 will be referred to as the city MS 30. The management system MS comprises a computer as hardware. The computer can comprise either a single computer or a plurality of computers.

In the first embodiment, each of the country MS 10 or the prefecture MS 60 has the position as a server. The city MS 30 has the position as a control apparatus.

The social infrastructures 51 to 5n include, for example, a water supply grid, a cold/heat source plant system, an electricity grid, a traffic network, a medical system, a store network, a building system, a home energy management system, a factory system, a content distribution system, and a railway network. Note that the social infrastructures are not limited to those.

The country cloud 100, the prefecture clouds 200, and the city clouds 300 are connected to each other via the telecommunication lines of the communication network NW. The communication network NW is a guarantee-type network capable of guaranteeing a required communication band (communication capacity). An example of the network of this type is a dedicated line using an optical communication technique. A VPN (Virtual Private Network) formed in an IP (Internet Protocol) network can also be included in the category of the network of this type. The communication network NW can also be included in the social infrastructures, as a matter of course. A telecommunication line of the communication network NW can guarantee a real time characteristic concerning, for example, transmission (upload) of event information from the lower layer to the upper layer.

The event means a short-term or long-term change of state and the state itself of each social infrastructures 51 to 5n. The event information means a signal detected and outputted by a sensor 50a provided in each of the social infrastructures 51 to 5n. Or, the event information means all information created on the basis of the signal.

Each of the social infrastructures 51 to 5n of the city cloud 300 established in relation to the community comprises the sensor 50a and an actuator 50b. The sensor 50a detects, for example, event information unique to the social infrastructure. Alternatively, the sensor 50a detects event information related to a plurality of social infrastructures. That is, the sensor 50a can be any means capable of detecting the state of a social infrastructure and converting it into a numerical value or data. A surveillance camera can also be included in the category of the sensor 50a.

The actuator 50b controls the control target based on a given control signal. The actuator 50b is, for example, a motor that opens/closes a valve provided in the purification system of a water supply infrastructure. The actuator 50b drives the motor based on a control signal that designates the degree of opening of a valve, thereby controlling the degree of opening of the valve and the flow rate of water.

The city MS 30 comprises, as processing functions according to the embodiment, a control unit 30a, a collection unit 30b, an upload unit 30c, a calculation unit 30d, a selection unit 30e, a download unit 30f, a creation unit 30g, and a setting unit 30h.

The control unit 30a gives the actuators 50b control instructions based on, for example, control data received from the country MS 10 or the prefecture MS 60 or control data created by itself, thereby controlling the social infrastructures 51 to 5n. Examples of the control instructions are control signals to control the degree of opening of a valve in the water infrastructure and the rotation speed of the air conditioning inverter in a public infrastructure.

The control unit 30a controls the social infrastructures 51 to 5n based on software. That is, the city MS 30 is a computer comprising the software. Note that the city MS 30 may be implemented as a processing function concerning the city cloud 300.

The collection unit 30b collects event information detected by the sensor 50a. As the communication protocol associated with the data collection, ECHONET, ECHONET Lite, ZigBee, Z-Wave, KNX, or the like is usable. As the communication layer of the lower layer, wired LAN such as Ethernet, power line communication, wireless LAN, Bluetooth, or the like is usable.

The upload unit 30c transmits the event information detected by the sensor 50a to the country MS 10 of the country cloud 100 or the prefecture MS 60 of the prefecture cloud 200 via the telecommunication line of the communication network NW. That is, the upload unit 30c transmits the event information via the telecommunication line of the communication network NW. A public network or a leased line is sufficient as the telecommunication line. A signal line which can transmit the signal concerning event information is sufficient as the telecommunication line.

The event information is written in, for example, the payload of an IP packet and sent to the communication network NW. For example, a multicast address is described in the IP packet as the destination address. The country MS 10 and the prefecture MS 60 can collect event information by receiving the IP packet.

The calculation unit 30d analyzes the event information collected by the collection unit 30b, and calculates the characteristics of the social infrastructures 51 to 5n. The characteristics of the social infrastructures are, for example, various kinds of information such as the geographical conditions, environmental conditions, and operational conditions that can be expressed as numerical values. That is, any information capable of representing the characteristics of the social infrastructures can be used.

For example, the environmental conditions of a social infrastructure formed near the sea are different from those of a social infrastructure formed in a mountain village, as a matter of course. For example, the atmospheric temperature variation, the amount of sunshine, the monthly average rainfall, and the like are different, and the differences are reflected on the event information. For example, the amount of electricity generated by a photovoltaic power generating system is expected to be larger in a region with much sunshine than in the other regions. For this reason, software used to optimize the energy consumption needs to particularly have performance for reflecting it.

Alternatively, in a region with much rainfall or a region near a dam, software used to control a water infrastructure is expected to have performance different from that in other regions. The calculation unit 30d analyzes the collected event information, thereby calculating the characteristic on the social infrastructure community basis.

Otherwise, the calculation unit 30d analyzes the event information collected by the collection unit 30b and calculates the characteristic of the social infrastructures 51 to 5n themselves or the characteristics of domains as the targets of the social infrastructures 51 to 5n.

The social infrastructure target domain is a concept that means, for example, a social domain serving as the control target or management target of each infrastructure. For example, the domain of an electricity infrastructure corresponds to power consumption in each home, power distribution control based on it, the power production amount, the state of the power distribution network, or the like. Especially, a community including a social infrastructure can be regarded as the target domain of the social infrastructure control system.

In, for example, an electricity infrastructure, the characteristics of the target domain mean the characteristics and tendency of power consumption and correspond to the tendency of an increase in the door-to-door power generation amount along with an increase in the number of installed PV systems, the concept of the amount of reverse power flow, and the like. The characteristics of the target domains of a social infrastructure can also be regarded as the characteristics of the community or can be regarded to have a close relationship with the characteristics of the social infrastructure itself.

The selection unit 30e selects a software module according to the characteristics calculated by the calculation unit 30d from a software module group 20b stored in the database 20 of the country cloud 100. That is, a software module according to the characteristics of a social infrastructure or the characteristics of the target domain of the social infrastructure is selected. That is, a software module suitable for the social infrastructure is selected. In particular, the selection unit 30e periodically or irregularly repetitively executes the software module selection in accordance with a change in the characteristics, which occurs, for example, over time.

The download unit 30f downloads the software module selected by the selection unit 30e from the database 20 to the city MS 30 via the telecommunication line of the communication network NW. That is, the software module is acquired from the database 20 via the telecommunication line of the communication network NW. The creation unit 30g combines the downloaded software modules to create the software of the control unit 30a. This creation is similar concept as compiling or building in application development.

Especially, for example, every time the selection unit 30e executes software module selection, the creation unit 30g updates the software by the downloaded software module.

The setting unit 30h sets the parameters of the selected software module in accordance with the calculated characteristics. That is, many software modules have parameters capable of adjusting the functions of the software modules. The setting unit 30h manipulates the parameters, thereby making the software match the characteristics of the community.

The database 40 stores event information 40a. The event information 40a is information detected by the sensor 50a. That is, the city MS 30 transmits the event information 40a collected by itself to the country MS 10 and also locally stores the event information 40a.

The country MS 10 is connected to the city MS 30 via the telecommunication line of the communication network NW and has the position of a server for the city MS 30 serving as a control apparatus. The country MS 10 is also a computer that functions by a program or a processing function provided by the country cloud 100. The country MS 10 comprises an acquisition unit 10a and a transmission unit 10b as processing functions according to the embodiment.

The acquisition unit 10a acquires event information transmitted from the city MS 30. The acquired event information is stored in the database 20 as the event information 20a. The event information 20a is obtained by concentratedly storing all pieces of event information transmitted from the plurality of city clouds 300 (FIG. 2).

The transmission unit 10b transmits, to the city MS 30, a software module requested by the city MS 30.

The database 20 stores the software module group 20b in addition to the event information 20a. As is known, a software module is a component, so to speak, which is used to create one piece of software and serves as an object or entity common to a plug-in module or the like.

In the above-described arrangement, the city MS 30, the prefecture MS 60, and the country MS 10 are management apparatuses including computers detachably connected to the telecommunication line of the communication network NW via interface units 6. The computers can carry out their functions on a standalone basis. Alternatively, a plurality of computers provided in the cloud computing system may cooperatively implement the functions of the city MS 30, the prefecture MS 60, and the country MS 10. How to implement the control unit 30a, the collection unit 30b, the upload unit 30c, the calculation unit 30d, the selection unit 30e, the download unit 30f, the creation unit 30g, the setting unit 30h, the acquisition unit 10a, and the transmission unit 10b in the system can easily be understood by those skilled in the art.

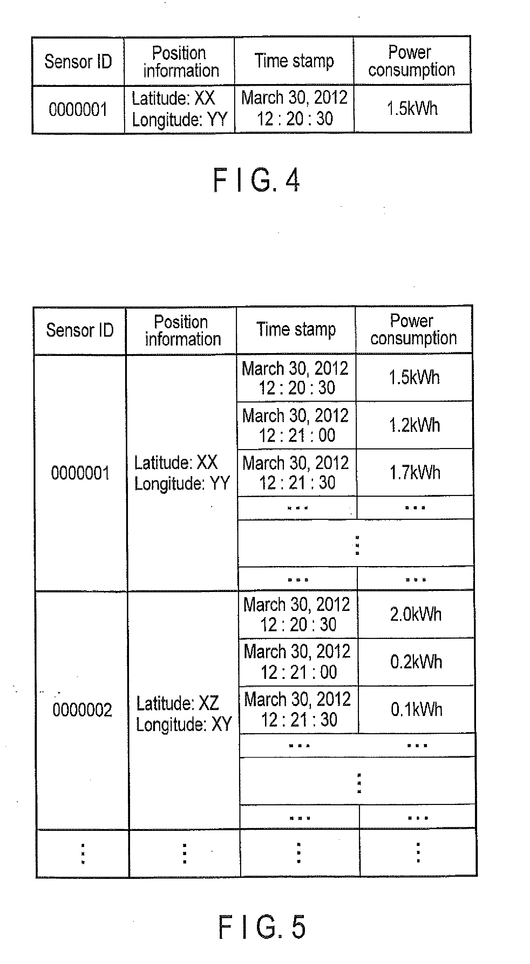

FIG. 4 is a view showing an example of event information detected by the sensor 50a. A smart meter will be exemplified as the sensor 50a. In this case, examples of the items of the event information are the identification information (sensor ID) of the smart meter, the position information (latitude and longitude) of the site of installation, the measured value of power consumption, and the time stamp of the measurement site.

FIG. 5 is a view showing an example of the event information 20a stored in the database 20 of the country cloud 100. As shown in FIG. 5, the event information 20a is stored one-dimensionally as the event information, so to speak, raw data detected by the sensor 50a. Hence, the database 20 requires a storage device having an especially large capacity. Instead of using a single storage device, a plurality of storage devices distributed on the cloud are preferably used to constitute the database 20. The mass storage device of this type is sometimes called Big Data.

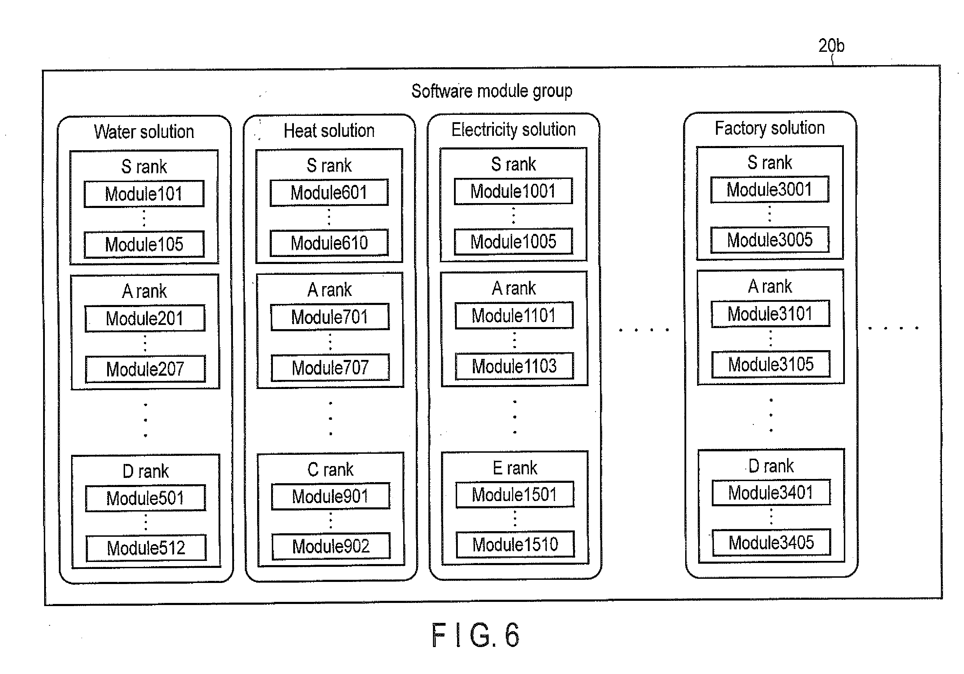

FIG. 6 is a view showing an example of the software module group 20b shown in FIG. 3. The software module group 20b includes a plurality of software modules (to be abbreviated as modules hereinafter) each of which provides a unique function. The actual form of each module can be a code sequence described in a specific language, binary data decoded up to a machine language level, or data obtained by encrypting it.

The modules are given, for example, serial numbers for the sake of discrimination. The modules are put into units on the basis of, for example, a solution corresponding to each social infrastructure and managed. In addition, ranks S, A, B,... are set for the units in accordance with, for example, the service contents, and the modules of each rank can be managed together. The hierarchical structure is convenient in managing the variety of modules.

Each module is updated or upgraded by its vendor (provider). The software module group 20b is thus extended sequentially. The vendor of each module can construct a business model that earns a profit by suitably charging a service beneficiary every time a module is downloaded.

Information representing what kind of function is provided by a module, the serial number to individually specify each module, and the updating history are sent to the city MS 30 in the form of a list or XML data. The city MS 30 can specify the module to be downloaded from the notified contents.

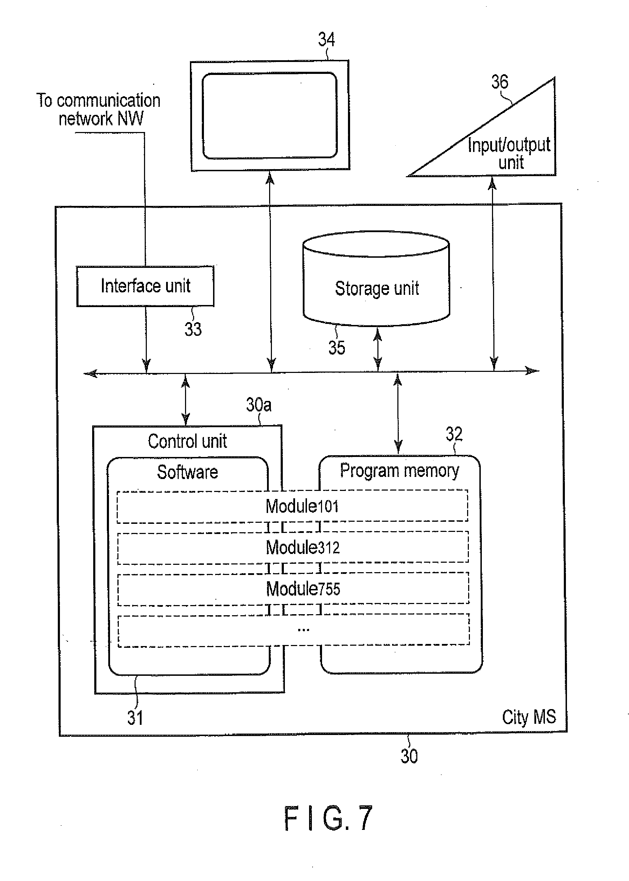

FIG. 7 is a functional block diagram showing an example of the main part of the city MS 30. The city MS 30 comprises an interface unit connectable to the telecommunication line of the communication network NW, a display unit 34 and an input/output unit 36 which serve as a human-machine interface to the user (operator), and a storage unit 35 such as a hard disk drive. Note that the city MS 30 can have the functions according to the embodiment even in a standalone state in which the city MS is not connected to the telecommunication line of the communication network NW.

The city MS 30 also comprises the control unit 30a (FIG. 3) and a program memory 32. The control unit 30a carries out the function by software 31. The software 31 is created by combing a plurality of modules. The modules are loaded to the program memory 32 and implement the function of the software 31 by arithmetic processing of a CPU (Central Processing Unit) (not shown).

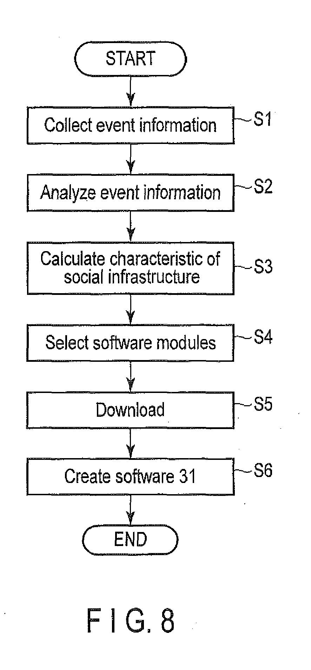

FIG. 8 is a flowchart showing an example of the processing procedure of the city MS 30 according to the first embodiment. Referring to FIG. 8, the city MS 30 collects event information detected by the sensor 50a (step S1). The city MS 30 analyzes the collected event information (step S2) and calculates the characteristics of the social infrastructures 51 to 5n based on the result of analysis (step S3).

The city MS 30 selects modules corresponding to the calculated characteristics from, for example, a list (software module group 20b shown in FIG. 6) notified in advance (step S4). The city MS 30 then requests country cloud 100 to transmit the selected modules via the telecommunication line of the communication network NW. The city MS 30 then acquires the selected modules from the database 20 of the country cloud 100 (step S5). The city MS 30 combines the acquired modules and performs processing such as compiling or building to create the software 31 (step S6).

Created software 31 is installed in a redundant computer separately formed to the city MS 30. And, by invoking the redundant computer after taking over of the data from the computer under operation, processing of address modification, etc, are completed, the software is updated without the interruption of services.

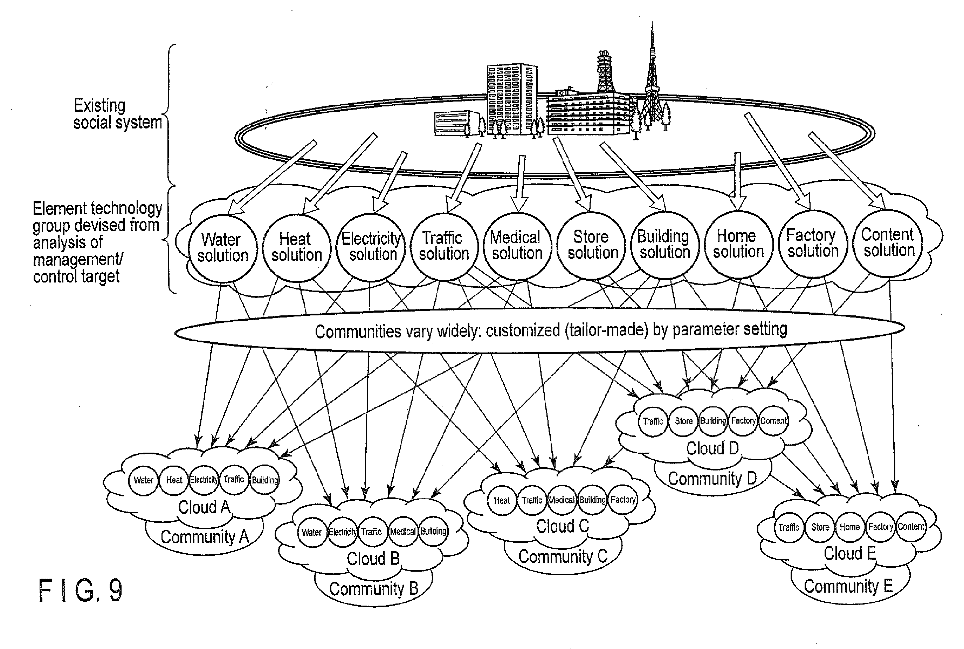

FIG. 9 is a view schematically showing the gist of the concept disclosed in the embodiment. In this embodiment, the management/control targets are analyzed for each social infrastructure, thereby extracting an element technology group formed from a plurality of solutions such as water, heat, and electricity. Modules are stored for each solution.

On the other hand, each of the communities (communities A to E) is formed as a cloud and functions as a lower cloud relative to an upper cloud which is belongs to the administration or the vendor. Since the communities vary widely and have a variety of characteristics, the necessary solutions are also different.

The calculation unit calculates the characteristic of each social infrastructure. The solution required by the community is thus grasped, and a corresponding module is downloaded to the cloud. This makes it possible to create software as if it were tailor-made.

That is, the event information detected by the sensor 50a is directly transmitted to the country MS 10 and concentratedly stored, and at the same time, locally held in the city MS 30. The event information is analyzed to calculate the characteristic of each social infrastructure, and modules are selected and downloaded to the city MS 30 in accordance with the result of analysis. The downloaded modules are combined to create the software used to control the social infrastructure.

This allows to provide software indispensable for managing and operating a social system like tailor-made.

Additionally, according to the first embodiment, it is possible to flexibly cope with a change in the social system. That is, it is possible to analyze event information collected every moment and calculate the characteristic of a social infrastructure. Repeating this procedure enables to upgrade the software in accordance with the development or reduction of the social system. For example, as the population of residents increases, and the number of households increases along with the development of a community, the number of installed PV systems increases, and suitable control is necessary.

Conversely, when the population decreases, control that was necessary till then becomes unnecessary. In addition, an increase in the number of elderly people may stimulate a new demand for broadening services in the medical field. Such changes in the social system can be determined on the machine side using, for example, threshold determination based on the event information analysis result. Hence, when the changes are detected, and the software is upgraded in accordance with the changes in the social system, the social system can optimally be controlled while minimizing the load on the operator in human intervention.

### [Second Embodiment]

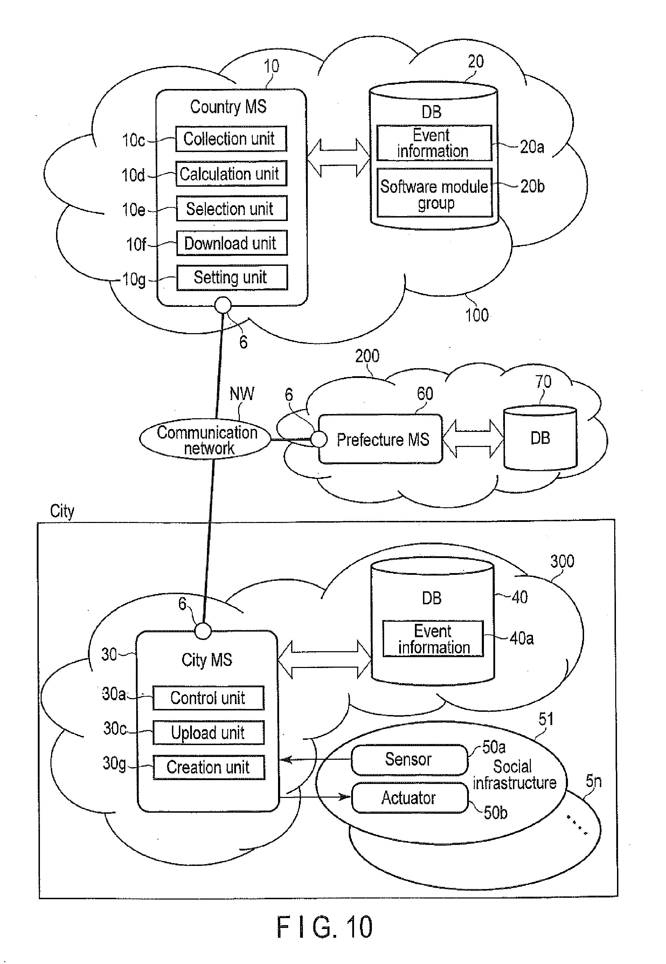

FIG. 10 is a functional block diagram showing an example of a social infrastructure control system according to the second embodiment. The same reference numerals as in FIG. 3 denote the same parts in FIG. 10, and only different parts will be described here.

In the system shown in FIG. 10, a function of analyzing the characteristic of a social infrastructure and a function of selecting a module are imparted to a country MS 10 of a country cloud 100.

More specifically, the country MS 10 comprises a collection unit 10c, a calculation unit 10d, a selection unit 10e, a download unit 10f, and a setting unit 10g. A city MS 30 comprises a control unit 30a, an upload unit 30c, and a creation unit 30g.

The collection unit 10c collects, via a telecommunication line of a communication network NW, event information transmitted from the city MS 30 and stores the event information in a database 20. The collection unit 10c analyzes the stored event information and calculates the characteristics of social infrastructures 51 to 5n. The selection unit 10e selects a module in accordance with the calculated characteristics. The download unit 10f downloads the selected module to the city MS 30 via the telecommunication line of the communication network NW. The setting unit 10g adjusts the parameters of the module.

In the above-described arrangement, the city MS 30, a prefecture MS 60, and the country MS 10 are, for example, computers detachably connected to the telecommunication line of the communication network NW via interface units 6. The computers can carry out their functions on a standalone basis. Alternatively, a plurality of computers provided in the cloud computing system may cooperatively implement the functions of the city MS 30, the prefecture MS 60, and the country MS 10. How to implement the control unit 30a, the upload unit 30c, the creation unit 30g, the collection unit 10c, the calculation unit 10d, the selection unit 10e, the download unit 10f, and the setting unit 10g in the system can easily be understood by those skilled in the art.

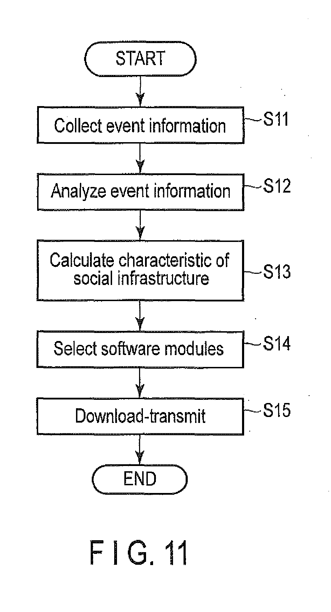

FIG. 11 is a flowchart showing an example of the processing procedure of the country MS 10 according to the second embodiment. Referring to FIG. 11, the country MS 10 collects, via the telecommunication line of the communication network NW, event information acquired in the city MS 30 (step S11). The country MS 10 analyzes the collected event information (step S12) and calculates the characteristics of the social infrastructures 51 to 5n based on the result of analysis (step S13).

The country MS 10 then selects modules corresponding to the calculated characteristics from a software module group 20b of the database 20 (step S14). The country MS 10 acquires the selected modules from the database 20, and transmits them to the city MS 30 via the telecommunication line of the communication network NW (step S15). Upon receiving the modules, the city MS 30 causes the creation unit 30g to create software 31.

According to the above-described arrangement, the country MS 10 selects the optimum combination of modules. That is, the country cloud 100 collects event information detected in a city cloud 300 and executes necessary calculations. This allows to reduce the processing load on the city cloud 300, in addition to the same effect as in the first embodiment.

In the first embodiment, the city MS 30 actively requests the country cloud 100 to transmit a module. Instead, according to the second embodiment, the country MS 10 actively selects a module and transmits it to the city cloud 300. This enables to provide a push-type service, so to speak.

### [Third Embodiment]

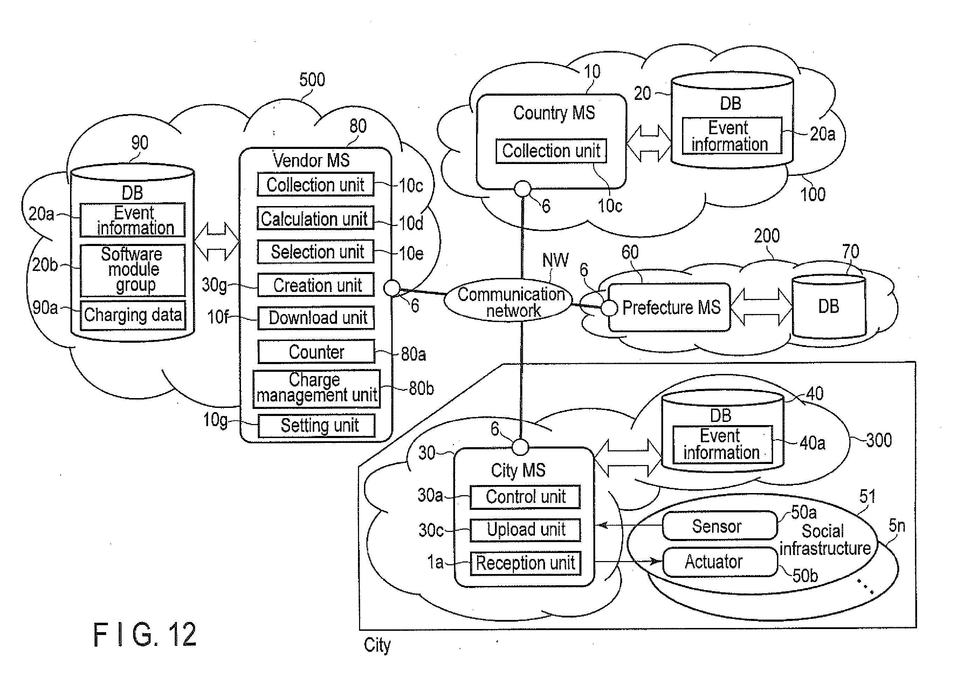

FIG. 12 is a view showing a social infrastructure control system according to the third embodiment. The same reference numerals as in FIG. 10 denote the same parts in FIG. 12, and different parts will mainly be described here.

In the third embodiment, an example of a service concerning control, management, and operation of a social infrastructure will be described in more detail. In the third embodiment, the presence of a company that provides software used to control a social infrastructure is taken into consideration. The company is generically called a vendor.

The system shown in FIG. 12 comprises a vendor cloud 500. The vendor cloud 500 can be connected to a telecommunication line of a communication network NW. The vendor cloud 500 is a cloud computing system managed and operated by a vendor, and comprises a vendor MS 80 and a database 90. The vendor cloud 500 is, for example, a computer or computer group having a server function. The computer comprises a memory that stores a program for implementing the functions according to the embodiment, and a control unit that executes the program.

The vendor MS 80 can be implemented as a computer itself, one of processing functions by a computer, or a data center. The database 90 can be stored in a storage device included in the vendor MS 80 or in another computer connected to the vendor MS 80.

In the third embodiment, the vendor MS 80 has the position as a server. The city MS 30 has the position as a control apparatus.

The vendor MS 80 comprises, as the functional blocks according to the embodiment, a collection unit 10c, a calculation unit 10d, a selection unit 10e, a creation unit 30g, a download unit 10f, a counter 80a, a charge management unit 80b, and a setting unit 10g. The database 90 can store event information 20a, and a software module group 20b.

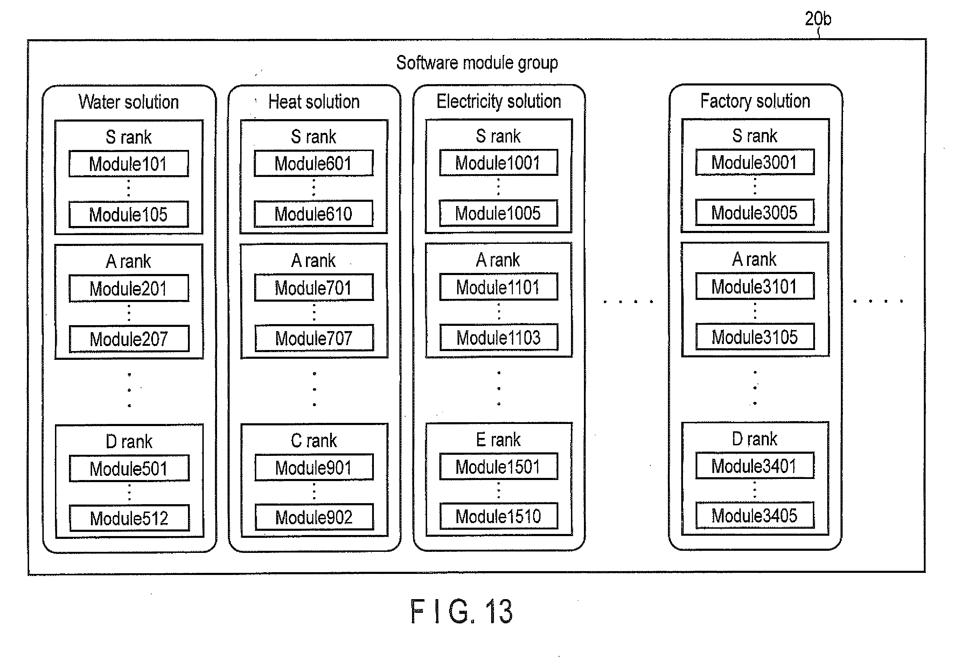

In the third embodiment, in particular, a unit price is set in advance for each software module by, for example, the vendor. The unit price can be set for, for example, each unit shown in FIG. 13 (to be described later) in accordance with service contents or the service rank. A unit price "free" can also be set.

The collection unit 10c of the vendor MS 80 collects the event information 20a detected by a sensor 50a from the city MS 30 via the telecommunication line of the communication network NW and stores it in the database 90. Note that the collection unit 10c of the country MS 10 also acquires the event information 20a transmitted from the city MS 30 via the telecommunication line of the communication network NW and stores it in the database 20.

The calculation unit 10d analyzes the event information 20a and calculates the characteristics of social infrastructures 51 to 5n. For example, if the social infrastructure concerning the event information is an electricity infrastructure, the calculation unit 10d calculates the characteristics of the region where the electricity infrastructure is installed, power consumption in each home, power distribution control based on it, the power production amount, the state of the power distribution network, and the like.

The selection unit 10e selects modules suitable for the characteristics of the social infrastructures 51 to 5n from the software module group 20b of the database 90. For example, if the target electricity infrastructure is located in an urban district, for example, a module suitable for demand response control is selected. If the electricity infrastructure is located in a region where the number of cloudless days is large, a module having a reverse power flow control function of a PV system may be selected. In this way, modules suitable for the characteristics of the social infrastructures are selected from the software module group 20b.

Based on the selected modules, the creation unit 30g creates software that can be installed in a control unit 30a of the city MS 30. That is, the creation unit 30g combines the plurality of modules selected by the selection unit 10e and performs compiling/linking/building or similar processing to create the software. At this time, the setting unit 10g may adjust the parameters of the modules.

The download unit 10f transmits the created software to the city MS 30 via the telecommunication line of the communication network NW. That is, the download unit 10f encodes the binary data of the software into, for example, a compressed file, adds the IP address of the city MS 30, and sends the thus generated IP packet to the telecommunication line of the communication network NW.

The counter 80a counts the amount of software downloaded to the city MS 30. Any "amount" such as the number of downloaded software, the data size, or the number of bytes can be used as long as it can quantitatively be counted and used as the basis of charging.

The charge management unit 80b acquires the amount counted by the counter 80a and calculates charging data 90a based on the unit price of the selected module. The charging data 90a can be managed in a table for, for example, each of cities/towns/villages. The charging data 90a is stored in the storage unit (not shown) of the vendor MS 80 or the database 90. The charging data 90a is information used when charging a beneficiary such as the operator (for example, municipality) of the city MS 30 or a resident and also serving as the source of income for the vendor.

The city MS 30 comprises the control unit 30a, an upload unit 30c, and a reception unit 1a. The upload unit 30c transmits event information detected by the sensor 50a to the vendor MS 80 via the telecommunication line of the communication network NW. Note that the country cloud 100, the prefecture cloud 200, and the like can be connected to the telecommunication line of the communication network NW.

The reception unit 1a receives an IP packet transmitted from the vendor MS 80 to the city MS 30. The city MS 30 extracts a compressed file of software from the payload of the received IP packet, decodes the compressed file to reproduce the software, and installs the software in itself. Under the control of the software, the control unit 30a controls the social infrastructures 51 to 5n.

In the above-described arrangement, the city MS 30, the prefecture MS 60, the country MS 10, and the vendor MS 80 are, for example, computers detachably connected to the telecommunication line of the communication network NW via interface units 6. The computers can carry out their functions on a standalone basis. Alternatively, a plurality of computers provided in the cloud computing system may cooperatively implement the functions of the city MS 30, the prefecture MS 60, the country MS 10, and the vendor MS 80. How to implement the control unit 30a, the upload unit 30c, the reception unit 1a, the creation unit 30g, the collection unit 10c, the calculation unit 10d, the selection unit 10e, the download unit 10f, the counter 80a, the charge management unit 80b, and the setting unit 10g in the system can easily be understood by those skilled in the art.

FIG. 13 is a view showing an example of the software module group 20b shown in FIG. 12. The software module group 20b includes a plurality of software modules (to be abbreviated as modules) each of which provides a unique function. The actual form of each module can be a code sequence described in a specific language, binary data decoded up to a machine language level, or data obtained by encrypting it.

The modules are given, for example, serial numbers for the sake of discrimination. The modules are put into units on the basis of, for example, a solution corresponding to each social infrastructure and managed. In addition, ranks S, A, B,... are set for the units in accordance with, for example, the service contents, and the modules of each rank can be managed together. The hierarchical structure is convenient in managing the variety of modules.

Each module is updated or upgraded by the terminal (not shown) of the vendor (provider). The software module group 20b is thus extended sequentially. The vendor of each module can construct a business model that earns a profit by suitably charging a service beneficiary every time a module is downloaded.

Information representing what kind of function is provided by a module, the serial number to individually specify each module, and the updating history are sent to the city MS 30 in the form of a list or XML data. The city MS 30 can specify the module to be downloaded from the notified contents.

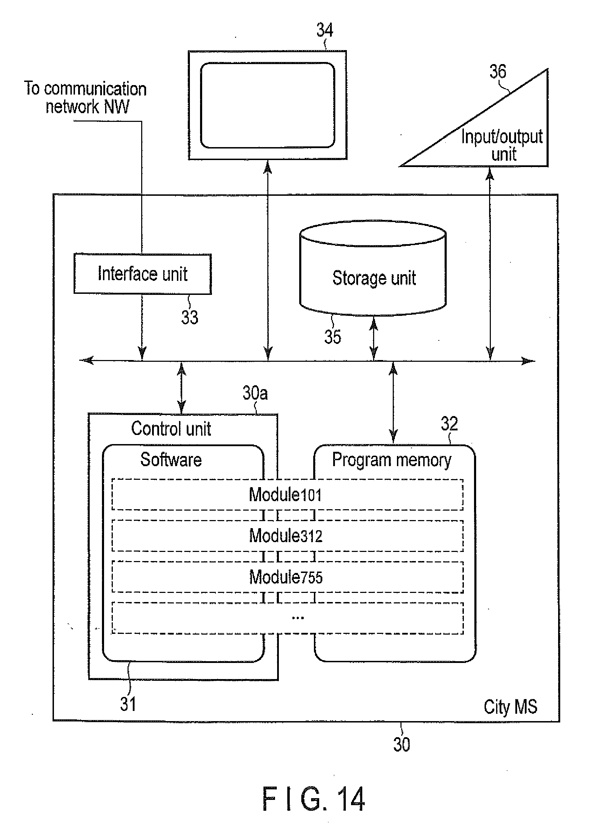

FIG. 14 is a functional block diagram showing an example of the main part of the city MS 30. The city MS 30 comprises an interface unit connectable to the telecommunication line of the communication network NW, a display unit 34 and an input/output unit 36 which serve as a human-machine interface to the user (operator), and a storage unit 35 such as a hard disk drive. Note that the city MS 30 can have the functions according to the embodiment even in a standalone state in which the city MS is not connected to the telecommunication line of the communication network NW.

The city MS 30 also comprises the control unit 30a (FIG. 12) and a program memory 32. The control unit 30a carries out the function by software 31. The software 31 is created by combing a plurality of modules. The modules are loaded to the program memory 32 and implement the function of the software 31 by arithmetic processing of a CPU (Central Processing Unit) (not shown).

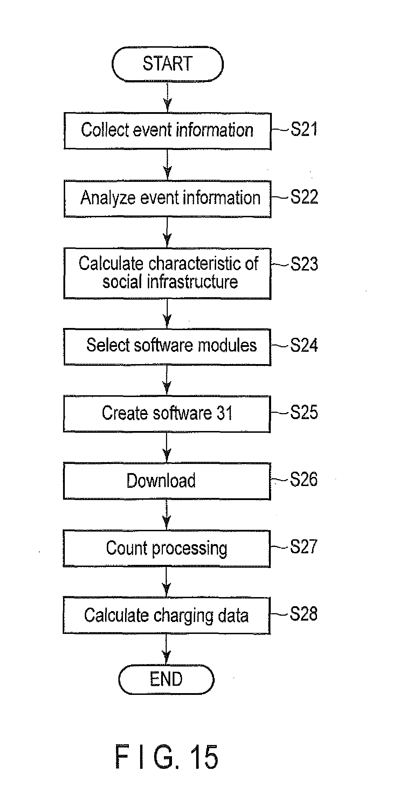

FIG. 15 is a flowchart showing an example of the processing procedure of the vendor MS 80 according to the third embodiment. Referring to FIG. 15, the vendor MS 80 collects, via the telecommunication line of the communication network NW, event information acquired by the city MS 30 (step S21). The vendor MS 80 analyzes the collected event information (step S22) and calculates the characteristics of the social infrastructures 51 to 5n based on the result of analysis (step S23).

The vendor MS 80 selects modules corresponding to the calculated characteristics from the software module group 20b of the database 90 (step S24). The vendor MS 80 acquires the selected modules from the database 20, combines the acquired modules, and performs processing such as compiling or building to create the software 31 (step S25).

The vendor MS 80 then download-transmits the created software 31 to the city MS 30 via the telecommunication line of the communication network NW (step S26). The vendor MS 80 counts the amount of the software 31 downloaded to the city MS 30 (step S27), and calculates the charging data 90a based on the count value (step S28).

As described above, according to the third embodiment, the software vendor provides the software module group 20b and the software for social infrastructure control. Every time a module or software is downloaded, charging data is calculated. The charging data is managed for each beneficiary of the software. This allows the vendor to charge the beneficiaries for the provided software. It is therefore possible to give the vendor incentives to develop software and sequentially extend the service.

An operator (for example, an operator who belongs to the vendor) can access from a remote terminal (not shown) to the vendor MS 80 via the telecommunication line of the communication network NW and execute various kinds of processing. For example, an operator who has passed security authentication can extract the charging data 90a from the database 90 of the vendor MS 80. The charging data 90a can be processed to customer-specific charging data or accumulated charging data and displayed on the screen of the remote terminal. The charging data 90a can also be printed or converted into data of CSV format and output.

The operator can also upload an updated or improved version of a module already stored in the database 90 or a newly developed module from the remote terminal via the telecommunication line of the communication network NW. In this case as well, authentication processing is necessary. However, since the software modules are placed in the cloud, various advantages can be obtained regarding maintenance and upgrading.

### [Fourth Embodiment]

In the fourth embodiment, a control target is a community having social infrastructures. A community has a variety of social infrastructures that support people's livelihood, including an energy infrastructure, a water supply infrastructure, and a medical infrastructure. A community that implements comfort, safety, and energy saving by synthetically controlling infrastructures is particularly called a smart community.

In recent years, communities managed by a developer, a proprietary company, or a general power receiving contractor are growing in number. In a community of this type, generally, power received from an electric power company at once is distributed to a plurality of customers in the community. Examples of the community of this type are a shopping mall, an apartment house, an industrial park, a residential street, and so on.

In the fourth embodiment, the presence of a company such as a developer that manages and operates a community is taken into consideration. For example, a company that receives power from an electric power company at once and distributes it in a community can be understood as an example of the company. A vendor can provide software at cost to the company that operates the community.

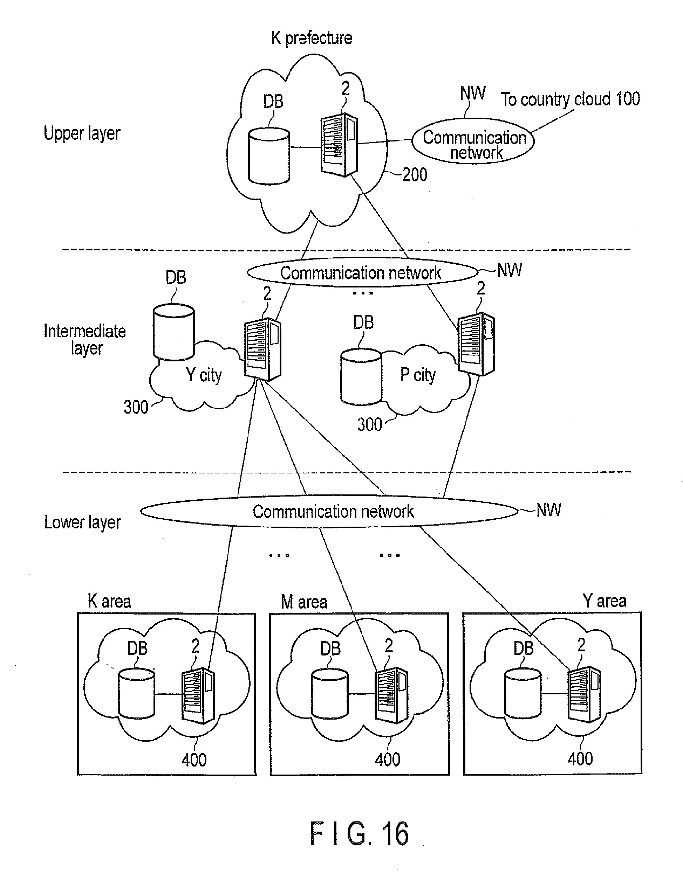

FIG. 16 is a conceptual view showing an example of a social infrastructure control system according to the fourth embodiment. Referring to FIG. 16, a K prefecture is located in the upper layer. A prefecture cloud 200 of the K prefecture is connected to a country cloud 100 and city clouds 300 of a Y city and a P city via a telecommunication line of a communication network NW.

The city cloud 300 of the Y city is connected to a plurality of area clouds 400 via the telecommunication line of the communication network NW. FIG. 16 shows the clouds of a K area, an M area, and a Y area.

Each of the K area, the M area, and the Y area can be regarded as a municipality or a municipality group belonging to the Y city. That is, the K area, the M area, and the Y area are, for example, districts, manufacturing quarters, office blocks which are wide to some extent (for example, 3 km square) and in which people live. The K area, the M area, and the Y area form communities.

Each of the area cloud 400 of the K area, the area cloud 400 of the M area, and the area cloud 400 of the Y area comprises a computer 2 and a database DB. The area clouds 400 are connected via the telecommunication line of the communication network NW and cooperate with each other.

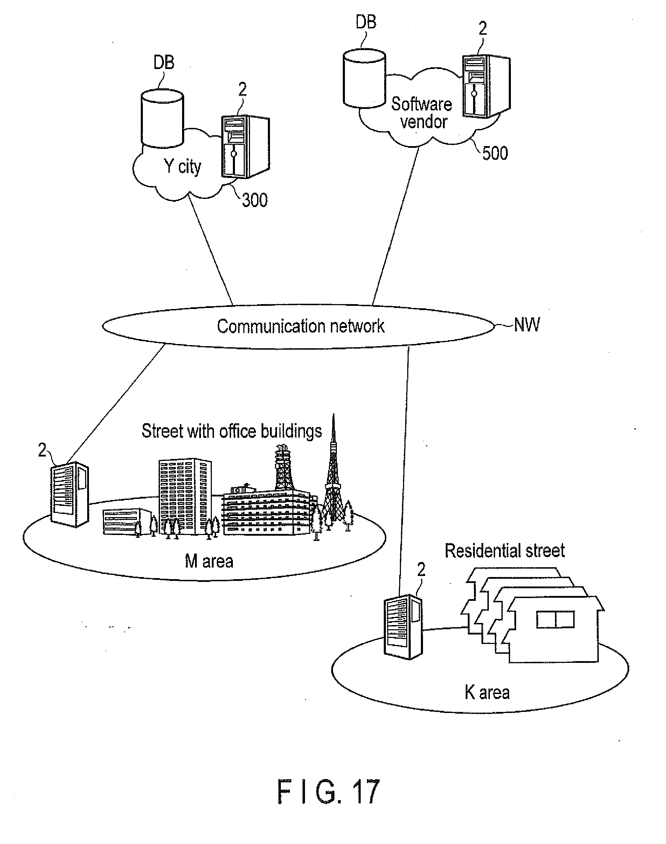

FIG. 17 is a view schematically showing the main part of the system shown in FIG. 16. The city cloud 300 of the Y city is connected to the M area and the K area (and the Y area) via the telecommunication line of the communication network NW. Each area comprises the computer 2 that is used by a company that takes charge in the area.

The M area is, for example, a community having a street with extremely tall office buildings. The K area is, for example, a community having a residential street. Hence, each of the computer 2 that controls the M area and the computer 2 that controls the K area needs to have software whose function is fitting for the corresponding community.

A software vendor (vendor cloud 500) described in the third embodiment is connected to the telecommunication line of the communication network NW. The software installed in each computer 2 is provided by the vendor.

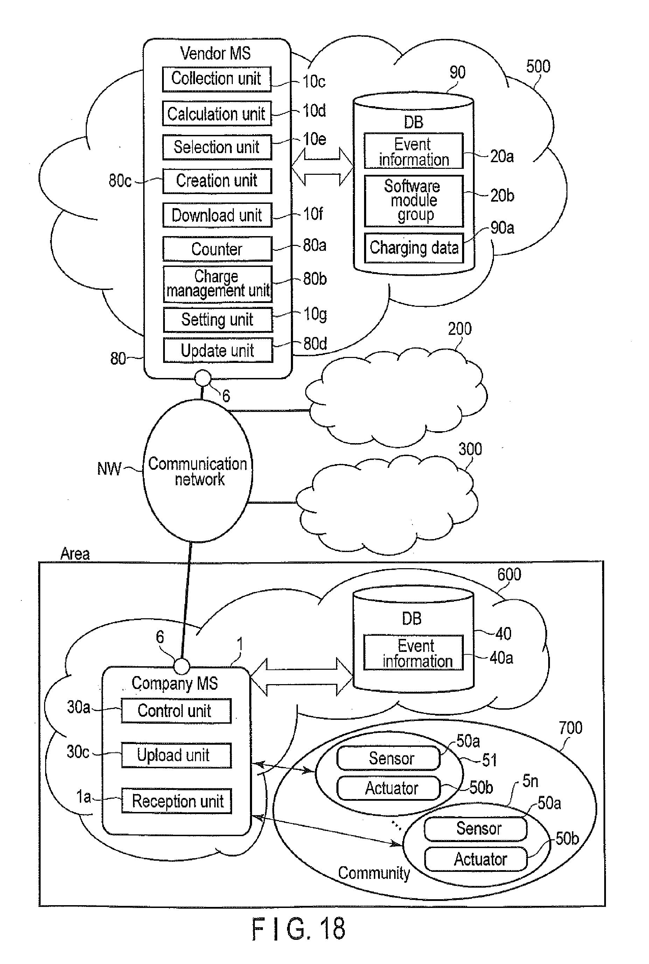

FIG. 18 is a view showing a social infrastructure control system according to the fourth embodiment. The system shown in FIG. 18 comprises the vendor cloud 500. The vendor cloud 500 can be connected to the telecommunication line of the communication network NW. The vendor cloud 500 is a cloud computing system managed and operated by a vendor, and comprises a vendor MS 80 and a database 90. The vendor cloud 500 is, for example, a computer or computer group having a server function. The computer comprises a memory that stores a program for implementing the functions according to the embodiment, and a control unit that executes the program.

The vendor MS 80 can be implemented as a computer itself, one of processing functions by a computer, or a data center. The database 90 can be stored in a storage device included in the vendor MS 80 or in another computer connected to the vendor MS 80.

On the other hand, in FIG. 18, for example, a community 700 corresponding to the K area, the M area, or the Y area (FIG. 16) is managed by a community cloud 600. The community cloud 600 comprises a company MS 1. The company MS 1 is, for example, the computer 2 (FIG. 17) and is connected to a database 40 provided in the community cloud 600.

In the fourth embodiment, the vendor MS 80 has the position as a server. The company MS 1 has the position as a control apparatus.

The community 700 comprises a plurality of social infrastructures 51 to 5n. The social infrastructures 51 to 5n are, for example, a water infrastructure, a heat infrastructure, an electricity infrastructure, a traffic infrastructure, a building infrastructure, and the like shown in, for example, FIG. 9. Each of the social infrastructures 51 to 5n comprises a sensor 50a and an actuator 50b.

The vendor MS 80 of the vendor cloud 500 comprises, as the functional blocks according to the embodiment, a collection unit 10c, a calculation unit 10d, a selection unit 10e, a creation unit 80c, a download unit 10f, a counter 80a, a charge management unit 80b, a setting unit 10g, and an update unit 80d. The database 90 can store event information 20a, a software module group 20b, and charging data 90a.

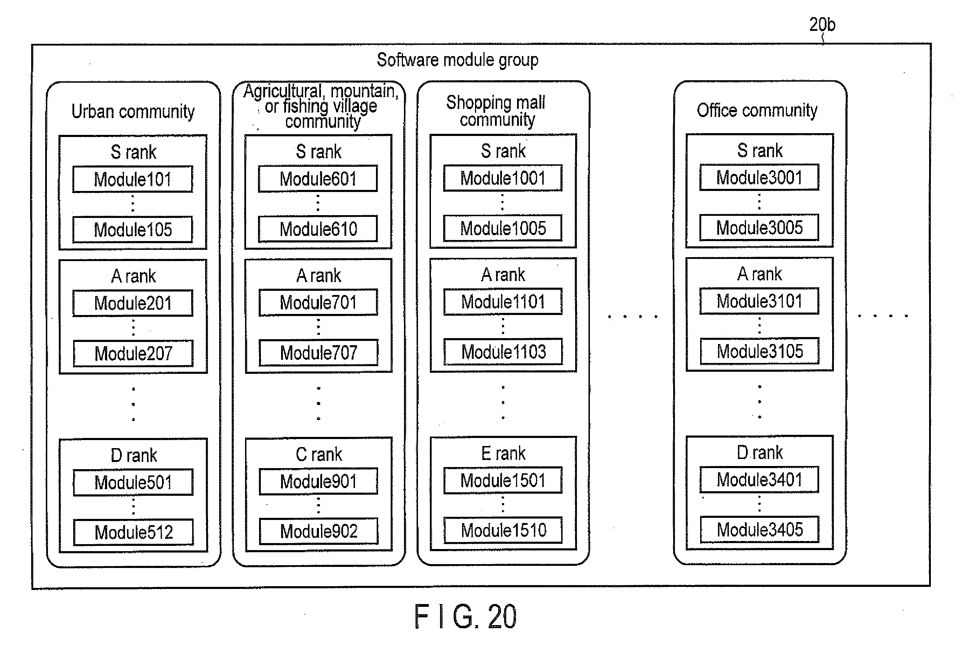

In the fourth embodiment, in particular, a unit price is set in advance for each software module by, for example, the vendor. The unit price can be set for, for example, each unit shown in FIG. 20 (to be described later) in accordance with service contents or the service rank. A unit price "free" can also be set.

The collection unit 10c collects the event information 20a detected by the sensor 50a from the company MS 1 via the telecommunication line of the communication network NW and stores it in the database 90.

The calculation unit 10d analyzes the event information 20a and calculates the characteristic of the community 700 including the social infrastructures 51 to 5n.

For example, if the social infrastructures concerning the event information are an electricity infrastructure and a medical infrastructure, the calculation unit 10d calculates the addresses at which a power plant, a substation, a power grid, a hospital, and the like are installed, the characteristics of regions where these infrastructures are installed, the age structure of residents, power consumption in a hospital, the state of the power distribution network up to a hospital to which the power should preferentially be distributed, and the like.

The selection unit 10e selects modules suitable for the characteristic of the community 700 from the software module group 20b of the database 90. For example, if the target community is the M area (FIG. 17), for example, a module suitable for BEMS-oriented demand response is selected. If the target community is the K area, for example, a module suitable for HEMS-oriented demand response control or door-to-door PV system control is selected. In this way, modules suitable for the characteristics of the community are selected from the software module group 20b.

Based on the selected modules, the creation unit 80c creates software that can be installed in a control unit 30a of the company MS 1. That is, the creation unit 80c combines the plurality of modules and performs compiling/linking/building or similar processing to create the software, as in the first to third embodiments. At this time, the setting unit 10g may adjust the parameters of the modules.

The download unit 10f transmits the created software to the company MS 1 via the telecommunication line of the communication network NW. That is, the download unit 10f encodes the binary data of the software into, for example, a compressed file, adds the IP address of the company MS 1, and sends the thus generated IP packet to the telecommunication line of the communication network NW.

The counter 80a counts the amount of software downloaded to the city MS 30. Any "amount" such as the number of downloaded software, the data size, or the number of bytes can be used as long as it can quantitatively be counted and used as the basis of charging.

The charge management unit 80b acquires the amount counted by the counter 80a and calculates charging data 90a based on the number of bytes of downloaded packets or the unit price of the selected module.

The charging data 90a can be managed in a table for, for example, each company or community. The charging data 90a is stored in the storage unit (to be described later) of the vendor MS 80 or the database 90. The charging data 90a is information used when charging a beneficiary such as the operator of the community or a resident of the community and also serving as the source of income for the vendor.

The update unit 80d updates the software of the company MS 1 in accordance with a change in the characteristic calculated by the calculation unit 10d. That is, the update unit 80d updates the software of the company MS 1 in accordance with a change in the characteristics of the social infrastructures 51 to 5n or the characteristic of the community 700.

On the other hand, the company MS 1 comprises the control unit 30a, an upload unit 30c, and a reception unit 1a. The upload unit 30c transmits event information detected by the sensor 50a to the vendor MS 80 via the telecommunication line of the communication network NW. Note that the prefecture cloud 200, the city cloud 300, and the like can be connected to the telecommunication line of the communication network NW.

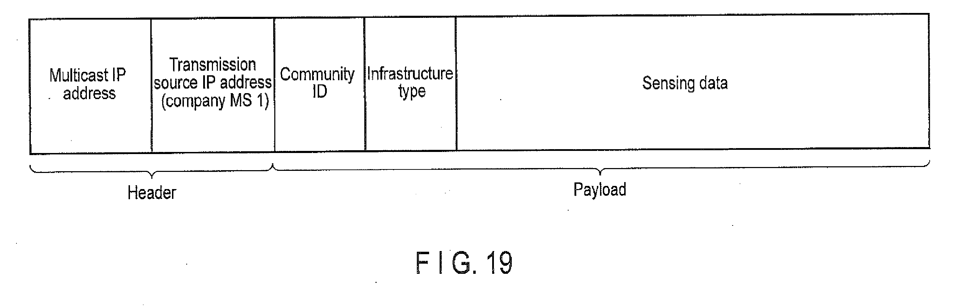

FIG. 19 is a view showing an example of event information transmitted from the company MS 1 to the vendor MS 1 via the telecommunication line of the communication network NW. The event information can be sent to the telecommunication line of the communication network NW in the form of, for example, an IP packet. Sensing data detected by the sensor 50a, the type of the social infrastructure concerning the sensing data, and information (Identification: ID) used to identify the community 700 including the social infrastructure are, for example, described in the payload of the IP packet.

The IP address of the transmission source (company MS 1) and the multicast address are, for example, described in the header of the IP packet. The vendor MS 80, the country MS 10, and the prefecture MS 60 can collect sensing data as event information by receiving the IP packet. The form in which the sensing data and the infrastructure type are described in the payload of the IP packet can also be applied to the first to third embodiments.

Referring back to FIG. 18, the reception unit 1a of the company MS 1 receives an IP packet transmitted from the vendor MS 80 to the company MS 1. The company MS 1 extracts a compressed file of software from the payload of the received IP packet, decodes the compressed file to reproduce the software, and installs the software in itself. Under the control of the software, the control unit 30a controls the community 700.

As described above, the company MS 1 controls the sensor 50a and the actuator 50b of each of the social infrastructures 51 to 5n in the community 700 based on the software acquired from the vendor MS 80, thereby supporting comfortable and safe life of citizens in the community 700.

FIG. 20 is a view showing an example of the software module group 20b shown in FIG. 18. The software module group 20b includes a plurality of software modules (modules) each of which provides a unique function. The actual form of each module can be a code sequence described in a specific language, binary data decoded up to a machine language level, or data obtained by encrypting it.

The modules are given, for example, serial numbers for the sake of discrimination. The modules are put into units on the basis of, for example, a solution corresponding to each of communities of different types such as an urban community, an agricultural, mountain, or fishing village community, a shopping mall community, and an office community and managed.

In addition, ranks S, A, B,... are set for the units in accordance with, for example, the service contents, and the modules of each rank can be managed together. The hierarchical structure is convenient in managing the variety of modules.

Each module is updated or upgraded by its vendor or software developer. The software module group 20b is thus extended sequentially. The vendor of each module can construct a business model that earns a profit by suitably charging a service beneficiary every time a module is downloaded.

Information representing what kind of function is provided by a module, the serial number to individually specify each module, and the updating history are sent to the city MS 30 in the form of a list or XML data. The company MS 1 can specify the module to be downloaded from the notified contents.

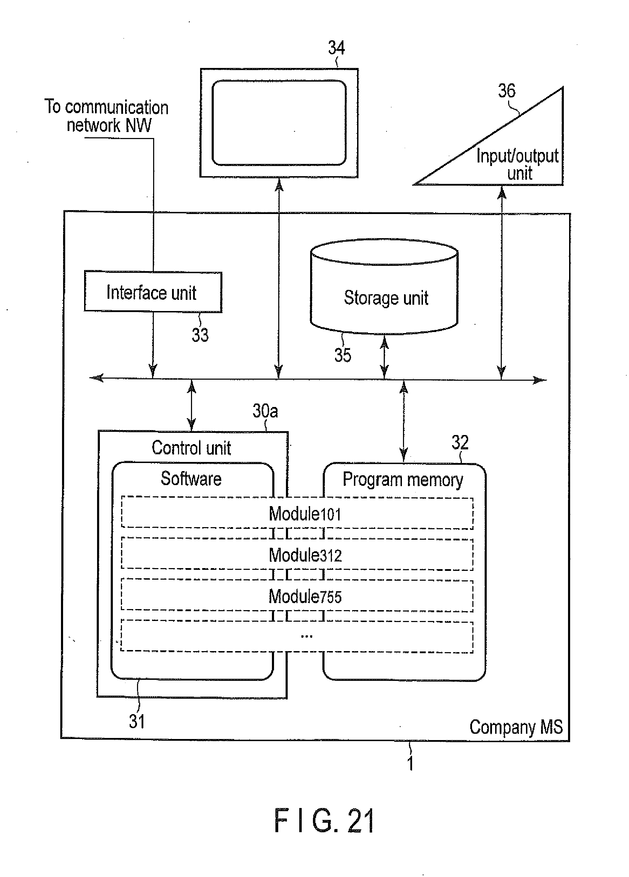

FIG. 21 is a functional block diagram showing an example of the main part of the company MS 1. The company MS 1 comprises an interface unit connectable to the telecommunication line of the communication network NW, a display unit 34 and an input/output unit 36 which serve as a human-machine interface to the user (operator), and a storage unit 35 such as a hard disk drive. Note that the company MS 1 can have the functions according to the embodiment even in a standalone state in which the company MS is not connected to the telecommunication line of the communication network NW.

The company MS 1 also comprises the control unit 30a (FIG. 18) and a program memory 32. The control unit 30a carries out the function by software 31. The software 31 is created by combing a plurality of modules. The modules are loaded to the program memory 32 and implement the function of the software 31 by arithmetic processing of a CPU (Central Processing Unit) (not shown).

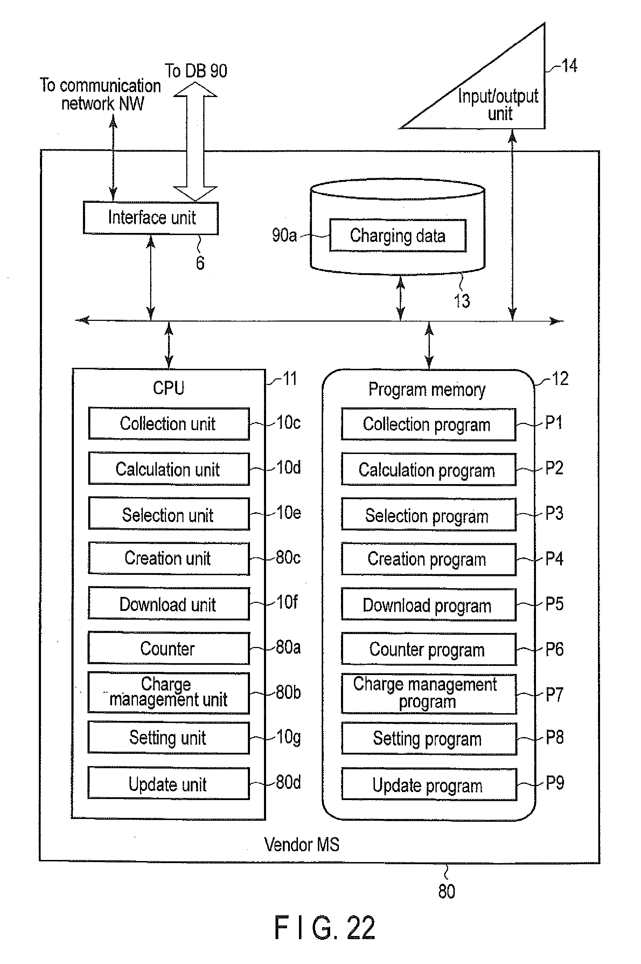

FIG. 22 is a functional block diagram showing an example of the vendor MS 80 shown in FIG. 18. The vendor MS 80 comprises an input/output unit 14, an interface unit 6, a storage unit 13, a CPU (Central Processing Unit) 11, and a program memory 12. That is, the vendor MS 80 is a computer that functions as the CPU 11 executes programs stored in the program memory 12.

The input/output unit 14 is a human-machine interface (an operation panel or a switch) operated by an operator or the like. The input/output unit 14 forms a GUI (Graphical User Interface) environment to receive information input by the user, and also provides information to the user.

The interface unit 6 is connected to the telecommunication line of the communication network NW and the database 90 and implements a communication function to the telecommunication line of the communication network NW and the clouds 500, 200, 300, and 600. A storage unit 46 stores the charging data 90a.

The program memory 12 stores a collection program P1, a calculation program P2, a selection program P3, a creation program P4, a download program P5, a count program P6, a charge management program P7, a setting program P8, and an update program P9 as the programs including instructions necessary for the processing function according to this embodiment. These programs can be either recorded in a removable medium (recording medium) such as a CD-ROM or downloaded via a communication line (including the telecommunication line of the communication network NW).

The CPU 11 reads out each program from the program memory 12 and performs arithmetic processing by hardware. The CPU 11 comprises, as the processing functions, the above-described collection unit 10c, calculation unit 10d, selection unit 10e, creation unit 80c, download unit 10f, counter 80a, charge management unit 80b, setting unit 10g, and update unit 80d.

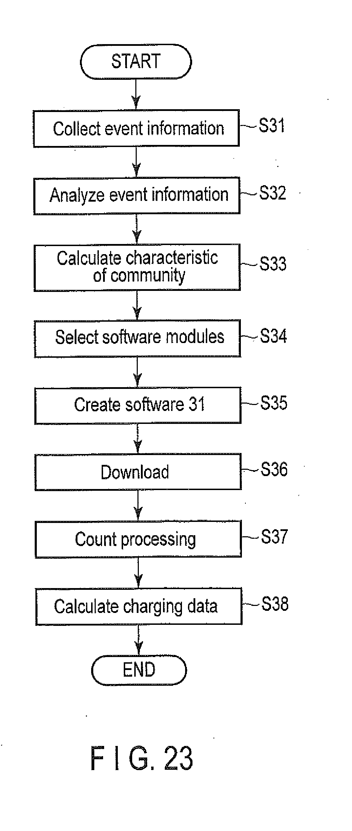

FIG. 23 is a flowchart showing an example of the processing procedure of the vendor MS 80 according to the fourth embodiment. Referring to FIG. 23, the vendor MS 80 collects, via the telecommunication line of the communication network NW, event information acquired by the company MS 1 with receiving the IP packet shown in FIG. 19 (step S31). The vendor MS 80 analyzes the collected event information (step S32) and calculates the characteristic of the community including the social infrastructures 51 to 5n based on the result of analysis (step S33).

The vendor MS 80 selects modules corresponding to the calculated characteristic from the software module group 20b of the database 90 (step S34). The vendor MS 80 acquires the selected modules from the database 20, combines the acquired modules, and performs processing such as compiling or building to create the software 31 (step S35).

The vendor MS 80 then download-transmits the created software 31 to the company MS 1 via the telecommunication line of the communication network NW (step S36). The vendor MS 80 counts the amount of the software 31 downloaded to the company MS 1 (step S37), and calculates the charging data 90a based on the count value (step S38).

The above-described procedure can repetitively be executed periodically or irregularly. That is, the software of the company MS 1 is irregularly or periodically updated in accordance with a change in the community characteristic over time.

As described above, according to the fourth embodiment, the vendor MS 80 calculates the characteristic of the community 700 and creates software based on the result. The company MS 1 need only receive the created software and install it in itself. For this reason, the company MS 1 need not have the function of creating software. This allows the side of the vendor MS 80 to easily unitarily manage the software version, charging data, and license information. It is therefore possible to construct a social infrastructure control system useful for both the system vendor and the community 700.

That is, according to the fourth embodiment, the software vendor provides the software used for community control. Every time the software is downloaded, charging data is calculated. The charging data is managed for each beneficiary of the software. This allows to give the same incentive as in the third embodiment to the vendor and provide a social infrastructure control system useful for the software vendor as well as the citizens who live in the community.

According to the fourth embodiment, it is possible to flexibly cope with a change in the community as a social system. That is, event information collected every moment is analyzed, and the characteristic of the community is calculated. Repeating this processing allows to upgrade the software in accordance with the development or reduction of the community.

### [Fifth Embodiment]

In the fifth embodiment, the function of the update unit 80d of the vendor MS 80 according to the fourth embodiment will be disclosed in detail.

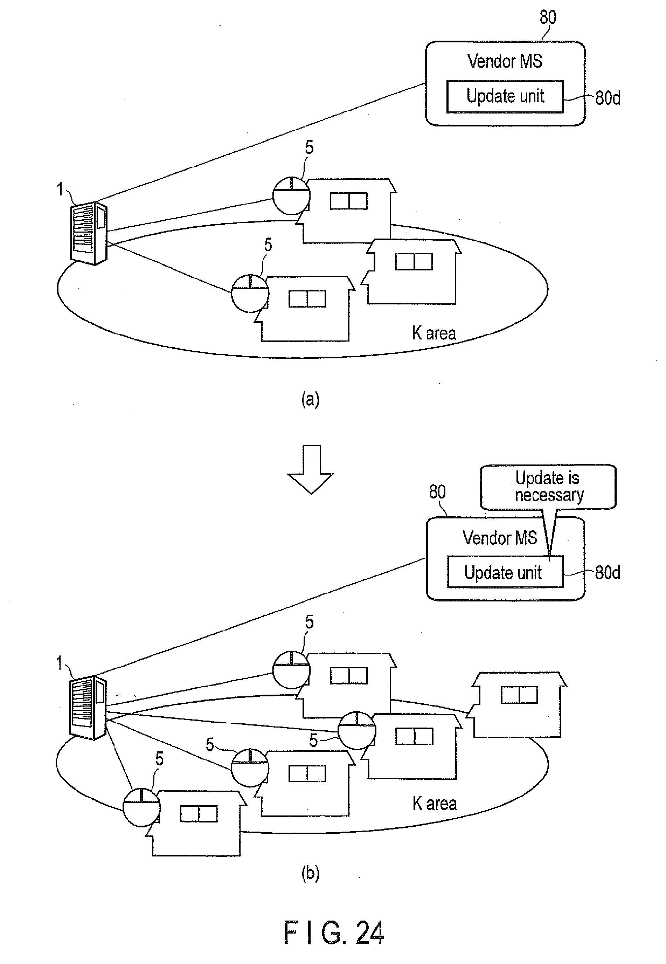

FIG. 24 is a schematic view showing an example of development of a social infrastructure and a community. For example, at the initial stage of formation of the K area (FIG. 17), the number of customers or the number of smart meters 5 is appropriate to the initial state, as shown in FIG. 24(a). The smart meter 5 is an example of a sensor 50a that acquires event information. By using the smart meter 5, the power demand, the power consumption, and the power generation amount of the PV system in each customer are acquired as event information.

When the community of the K area develops from the state shown in FIG. 24(a), the number of houses and customers increases, as shown in FIG. 24(b). Accordingly, the number of smart meters 5 increases. A house that has not comprised the smart meter 5 at the initial stage may be retrofitted with the smart meter 5. As is apparent, the number of sensors increases along with the development of the community.

The update unit 80d of the vendor MS 80 determines whether the software of the company MS 1 needs to be updated, for example, in response to a request from a company MS 1, or performing threshold determination of the number of sensor IDs described in event information.

Upon determining that the update is necessary, the vendor MS 80 analyzes the event information accumulated so far and calculates the new characteristic of the community. Based on the characteristic, the vendor MS 80 acquires software modules from the database, creates new software, and download-transmits it to the company MS 1. According to the fourth and fifth embodiments, since the software is updated along with the development of the community, it is possible to flexibly cope with the needs of the operator or customer of the community.

### [Sixth Embodiment]

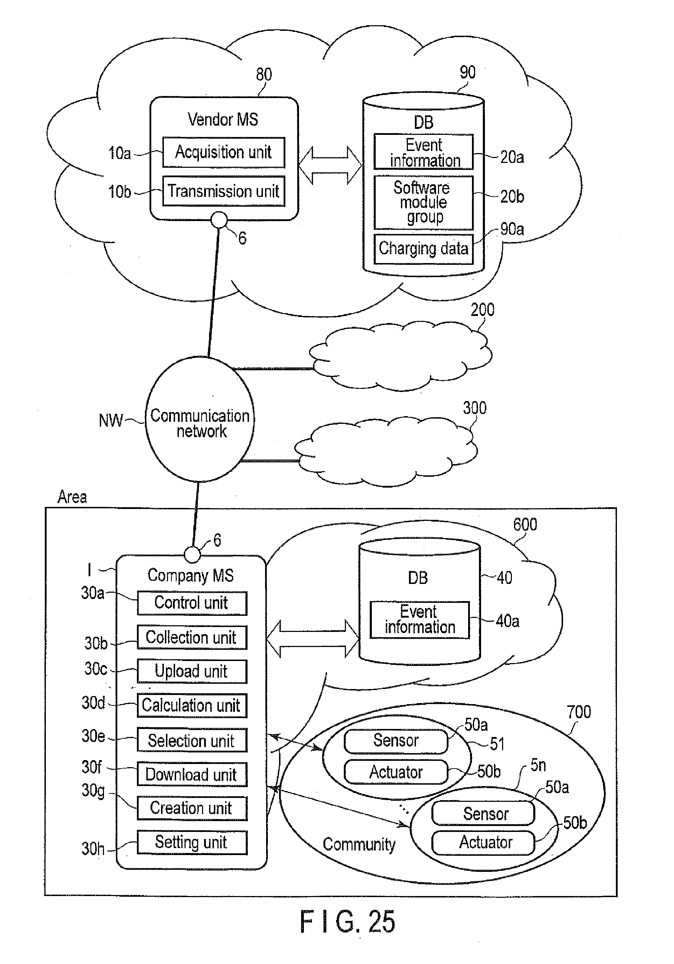

FIG. 25 is a functional block diagram showing an example of a social infrastructure control system according to the sixth embodiment. The same reference numerals as in FIG. 3 denote the same parts in FIG. 25, and only different parts will be described here.

In the system shown in FIG. 25, a function of analyzing the characteristic of a community and a function of selecting a module are imparted to a company MS 1 of a community cloud 600.

More specifically, the company MS 1 comprises a control unit 30a, a collection unit 30b, a upload unit 30c, a calculation unit 30d, a selection unit 30e, a download unit 30f, a creation unit 30g and a setting unit 30g. A vendor MS 80 comprises an acquisition unit 10a and a transmission unit 10b.

In the sixth embodiment, the vendor MS 80 has the position as a server. The company MS 1 has the position as a control apparatus.

The control unit 30a gives the actuators 50b control instructions based on control data, thereby controlling the social infrastructures 51 to 5n.

The collection unit 30b collects event information detected by the sensor 50a and stores the event information in a database 40.

The upload unit 30c transmits the event information detected by the sensor 50a to the vendor MS 80 of the vendor cloud 500 via the telecommunication line of the communication network NW. That is, the upload unit 30c transmits the event information via the telecommunication line of the communication network NW.

The calculation unit 10d analyzes the event information 40a and calculates the characteristics of the community 700 including social infrastructures 51 to 5n.

The selection unit 30e selects modules suitable for the characteristics of the community 700 from the software module group 20b of the database 90.

The download unit 30f downloads the software module selected by the selection unit 30e from the database 90 to the company MS 1 via the telecommunication line of the communication network NW. That is, the software module is acquired from the database 90 via the telecommunication line of the communication network NW. The creation unit 30g combines the downloaded software modules to create the software of the control unit 30a.

Especially, for example, every time the selection unit 30e executes software module selection, the creation unit 30g updates the software by the downloaded software module.

The setting unit 30h sets the parameters of the selected software module in accordance with the calculated characteristics. The setting unit 30h manipulates the parameters, thereby making the software match the characteristics of the community.

The acquisition unit 10a of the vendor MS 80 acquires event information transmitted from the company MS 1. The acquired event information is stored in the database 90 as the event information 20a. The transmission unit 10b transmits, to the company MS 1, a software module requested by the company MS 1.

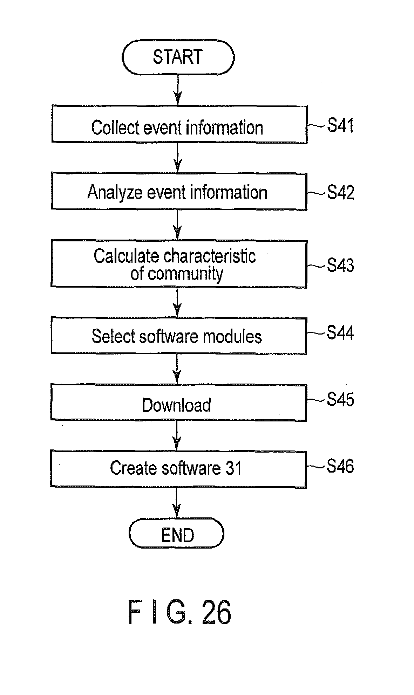

FIG. 26 is a flowchart showing an example of the processing procedure of the company MS 1 according to the sixth embodiment. Referring to FIG. 26, the company MS 1 collects event information detected by the sensor 50a (step S41). The company MS 1 analyzes the collected event information (step S42) and calculates the characteristics of the community 700 based on the result of analysis (step S3).

The company MS 1 selects modules corresponding to the calculated characteristics from, for example, a list (software module group 20b shown in FIG. 6) notified in advance (step

S44). The company MS 1 then requests the vendor MS 80 to transmit the selected modules via the telecommunication line of the communication network NW. The company MS 1 then acquires the selected modules from the database 90 of the vendor cloud 500 (step S45). The company MS 1 combines the acquired modules and performs processing such as compiling or building to create the software 31 (step S46).

In sixth embodiment, the company MS 1 calculates the characteristic of community 700. The solution required by the community is thus grasped, and a corresponding module is acquired from the vendor cloud 500. This makes it possible to create software as if it were tailor-made.

That is, the event information detected by the sensor 50a is directly transmitted to the vendor MS 80 and concentratedly stored, and at the same time, locally held in the company MS 1. The event information is analyzed to calculate the characteristic of the community, and modules are selected and downloaded to the company MS 1 in accordance with the result of analysis. The downloaded modules are combined to create the software used to control the social infrastructure.

This allows to provide software indispensable for managing and operating a social system in each community like tailor-made.

Note that the present invention is not limited to the above-described embodiments. For example, the characteristics of social infrastructures calculated by the calculation unit 30d or 10d, or the performance of each module selected based on the calculation result or the software that can be created may be visualized and displayed on the display unit 34 of the city MS 30.

Software modules can be created as only one for every solution. Or software modules can be shared among a plurality of solutions.

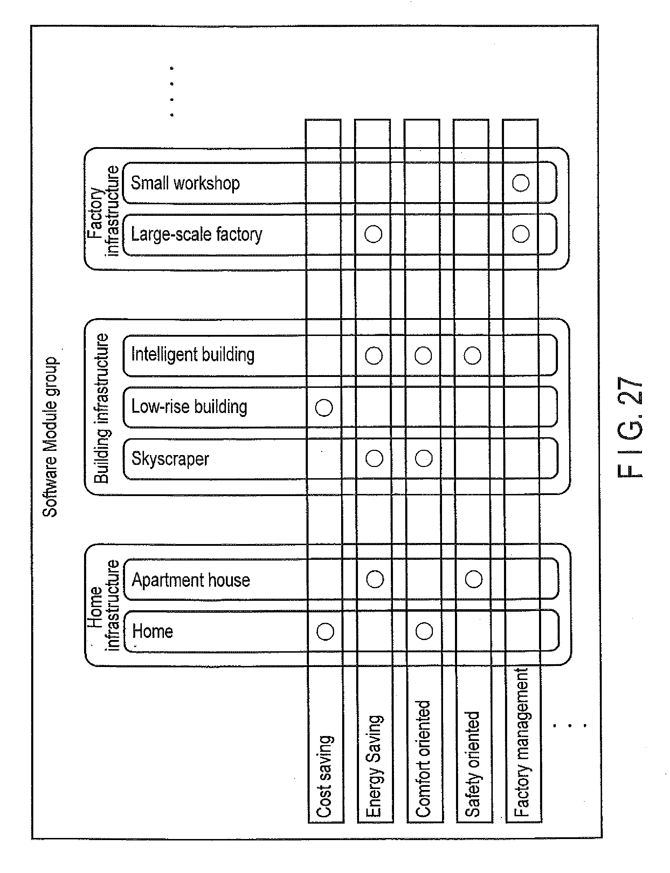

FIG. 27 is a view showing an example of classification of a software module group. A plurality of infrastructures, for example, home, building and factory will be considered. It is assumed that the home infrastructure includes home and apartment house, the building infrastructure includes skyscraper, low-rise building and intelligent building and the factory infrastructure includes large-scale factory and small workshop.

For example, the module realizes cost saving is needed, especially, by home and low-rise building. In this case, it is possible to share modules for cost saving between home and low-rise building. Similarly, it is possible to share modules for realizing energy saving between, for example, apartment house, skyscraper, intelligent building and large-scale factory. Like this, sharing one module among solutions allows to decrease the cost or load for developing the modules.

The combination of modules to create software is not always the one and only. For example, a plurality of module combinations may be selected on the machine side, and the performance of software or the service that can be provided in each combination may be displayed so as to cause the operator to select one of them. This allows the operator's will to intervene when creating software. This form is especially useful for the provider of an administrative service, and the need for this form is high.

Event information detected by the sensor 50a can be stored in any of the country cloud 100, the prefecture cloud 200, the city cloud 300, the vendor cloud 500, and the community cloud 600. The functional blocks such as the software module group 20b, the calculation unit 10d, the selection unit 10e, the setting unit 10g, the collection unit 30b, the calculation unit 30d, the selection unit 30e, the creation unit 30g, the setting unit 30h, the counter 80a, the charge management unit 80b, the creation unit 80c, and the update unit 80d can also be implemented anywhere in the system. That is, the functional blocks can be implemented as a program to be executed by a computer or a program recorded in a computer-readable recording medium.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes may be made without departing from the spirit of the inventions. The accompanying claims and their equivalents are intended to cover such forms or modifications as would fall within the scope and spirit of the inventions.

## Claims

1. A social infrastructure control system comprising:
a control apparatus configured to control a social infrastructure of a community based on software;
a database configured to store a plurality of modules;
a sensor configured to detect event concerning the social infrastructure, and to output event information;
a collection unit configured to collect the event information from the sensor;
a calculation unit configured to calculate a characteristic of the social infrastructure or the community by analyzing the collected event information;
a selection unit configured to select a module corresponding to the calculated characteristic from the database; and
a creation unit configured to create the software based on the selected module.

2. The social infrastructure control system according to claim 1, further comprising a management unit configured to manage charging data based on a unit price preset for the selected module.

3. The social infrastructure control system according to claim 1, wherein at least one of the modules has a parameter capable of adjusting a function of the module, and
the system further comprises a setting unit configured to set the parameter in accordance with the calculated characteristic when the selected module has the parameter.

4. The social infrastructure control system according to claim 1, further comprising an update unit configured to update the software in accordance with a change in the characteristic.

5. A server capable of communicating with a control apparatus for controlling a social infrastructure of a community based on software created with a plurality of modules, comprising:
a collection unit configured to collect event information concerning event related to the social infrastructure detected by a sensor;
a calculation unit configured to calculate a characteristic of the social infrastructure or the community by analyzing the collected event information; and
a selection unit configured to select a module corresponding to the calculated characteristic from a database that stores a plurality of modules.

6. The server according to claim 5, further comprising:
a creation unit configured to create the software based on the selected module; and
a transmission unit configured to transmit the created software to the control apparatus.

7. The server according to claim 5, further comprising a management unit configured to manage charging data based on a unit price preset for the selected module.

8. The server according to claim 5, wherein at least one of the modules has a parameter capable of adjusting a function of the module, and
the server further comprises a setting unit configured to set the parameter in accordance with the calculated characteristic when the selected module has the parameter.

9. The server according to claim 5, further comprising an update unit configured to update the software in accordance with a change in the characteristic.

10. A control apparatus for controlling a social infrastructure of a community based on software, comprising:
a collection unit configured to collect event information concerning event related to the social infrastructure detected by a sensor;
a calculation unit configured to calculate a characteristic of the social infrastructure or the community by analyzing the collected event information;
a notification unit configured to notify a server of the characteristic; and
a reception unit configured to receive the software or a module transmitted from the server in accordance with a notification of the characteristic.

11. The control apparatus according to claim 10, further comprising a creation unit configured to create the software based on the received module.

12. The control apparatus according to claim 10, further comprising a request unit configured to request the server to update the software in accordance with a change in the characteristic.

13. A control method comprising:
collecting event information outputted from a sensor that detects a event concerning a social infrastructure of a community;
calculating a characteristic of the social infrastructure or the community by analyzing the collected event information;
selecting a module corresponding to the calculated characteristic from a database that stores a plurality of modules; and
creating the software based on the selected module; and
controlling the social infrastructure based on the created software.

14. A control method comprising:
collecting event information outputted from a sensor that detects a event concerning a social infrastructure;
calculating a characteristic of the social infrastructure or a community that includes the social infrastructure by analyzing the collected event information;
selecting a module corresponding to the calculated characteristic from a database that stores a plurality of modules; and
controlling the social infrastructure based on the software that is created based on the selected module.

15. The control method according to any one of claims 13 and 14, further comprising managing charging data based on a unit price preset for the selected module.

16. The control method according to any one of claims 13 and 14, wherein at least one of the modules has a parameter capable of adjusting a function of the module, and
the method further comprises setting the parameter in accordance with the calculated characteristic when the selected module has the parameter.

17. The control method according to any one of claims 13 and 14, further comprises updating the software in accordance with a change in the characteristic.

18. A program to be executed by a computer, the program comprising:
collecting event information outputted from a sensor that detects a event concerning a social infrastructure of a community;
calculating a characteristic of the social infrastructure or the community by analyzing the collected event information; and
selecting a module corresponding to the calculated characteristic from a database that stores a plurality of modules.

19. The program according to claim 18, further comprising creating the software based on the selected module.

20. The control method according to claim 18, further comprising managing charging data based on a unit price preset for the selected module.

21. The control method according to claim 18, wherein at least one of the modules has a parameter capable of adjusting a function of the module, and
the control method further comprises setting the parameter in accordance with the calculated characteristic when the selected module has the parameter.

22. The control method according to claim 18, further comprising updating the software in accordance with a change in the characteristic.
